# EUROPEAN PATENT APPLICATION

(11) **EP 4 757 056 A1**
(43) Date of publication of application: **10.06.2026**
(21) Application number: 24931904.7
(22) Date of filing: 03.07.2024
(51) Int. Cl.: H01M 50/569

(54) **CCS ASSEMBLY AND BATTERY PACK**

(30) Priority: 29.03.2024 CN 202420647428 U
(71) Applicant: Eve Energy Storage Co., Ltd., Wuhan Hubei 430200 (CN)
(72) Inventor: YOU, Shaobo, Wuhan, Hubei 430200 (CN)
(74) Representative: Herrero & Asociados, S.L.
(86) International application number: PCT/CN2024/103292
(87) International publication number: WO 2025/200171

(57) **Abstract**

The present disclosure relates to a CCS assembly and a battery pack. The CCS assembly includes: a mounting bracket; a busbar group arranged on the mounting bracket, where the busbar group includes a plurality of busbars arranged at intervals; a plurality of wire harness fixing portions arranged on the mounting bracket, where in a width direction of the mounting bracket, the wire harness fixing portion is arranged beside an area between two adjacent busbars; and a wire harness fixed on the mounting bracket through the wire harness fixing portions.

## Description

The present disclosure claims priority to Chinese Patent Application No. 2024206474284 filed on March 29, 2024 with the Chinese Patent Office, the disclosure of which is incorporated herein by reference in its entirety.

### TECHNICAL FIELD

The present disclosure relates to the technical field of batteries, and in particular, to a CCS assembly and a battery pack.

### BACKGROUND

CCS assemblies (called cells contact system in English; called integrated busbar or wiring harness board integration, battery cover assembly in Chinese) are mainly composed of signal collection components (FPC, PCB, FFC, etc.), plastic structural components, copper and aluminium bars, etc., which are connected to form a whole by means of processes such as heat pressing or riveting, to realize high-voltage series and parallel connection of cells, as well as functions of battery temperature sampling and battery voltage sampling, and provides temperature and voltage to an BMS system through an FPC/PCB and a connector assembly. During a preparation of the CCS assembly, wire harness holes are usually arranged on a mounting bracket to cooperate with cable ties to fix wire harnesses. However, positions of the wire harness holes on the mounting bracket are usually arranged at intervals, and their arranged positions are not fixed. Therefore, it is found in actual use that when the wire harness holes are located beside an aluminum bar, the cable ties are likely to interfere with the aluminum bar, and there is room for improvement.

### TECHNICAL PROBLEM

Avoid interference between wire harness fixing portions and a busbar in the CCS assembly caused by direct contact between the two.

### SUMMARY

In a first aspect, the present disclosure provides a CCS assembly that includes:
a mounting bracket;
a busbar group arranged on the mounting bracket, wherein the busbar group includes a plurality of busbars arranged at intervals;
a plurality of wire harness fixing portions arranged on the mounting bracket, wherein in a width direction of the mounting bracket, the wire harness fixing portion is arranged beside an area between two adjacent busbars; and
a wire harness fixed on the mounting bracket through the wire harness fixing portions.

In a second aspect, the present disclosure provides a battery pack, including the foregoing CCS assembly.

### Beneficial effects

In practical use, the positions of the wire harness fixing portions arranged on the mounting bracket have been designed after research and development, and specially arranged beside an area between two adjacent busbars. Such an arrangement is equivalent to reserving work positions of the wire harness fixing portion beside the area between the two busbars. When the wire harness fixing portion is used to fix the wire harness, the wire harness fixing portion will not interfere with the busbar, thereby improving the overall position layout. Therefore, in the present disclosure, the CCS assembly can adjust the layout of the wire harness fixing portion according to the arrangement of the busbars, to avoid direct contact between the wire harness fixing portions and the busbars. Furthermore, the organization of the wire harnesses will be more standardized, which can improve the overall aesthetic appearance.

### BRIEF DESCRIPTION OF THE DRAWINGS

FIG. 1 is a structural schematic diagram of a CCS assembly according to an embodiment of the present disclosure;
FIG. 2 is a schematic diagram of the structure at area A in FIG. 1;
FIG. 3 is a schematic diagram of a bottom of a CCS assembly according to an embodiment of the present disclosure;
FIG. 4 is a structural schematic diagram of a mounting bracket of a CCS assembly according to an embodiment of the present disclosure;
FIG 5 is a structural schematic diagram of a buffer layer of a CCS assembly according to an embodiment of the present disclosure.

Reference numerals: 1, mounting bracket; 2, busbar; 3, wire harness hole; 4, wire harness; 5, buffer layer; 51, first avoidance notch; 52, second avoidance notch; 53, fifth avoidance notch; 54, third avoidance notch; 55, fourth avoidance notch; 6, pressure relief hole; 7, first wire-binding hole; 8, temperature-sensing reserved wire-binding hole; 9, voltage-collecting reserved wire-binding hole; 10, wire harness fixing portion.

### DETAILED DESCRIPTION

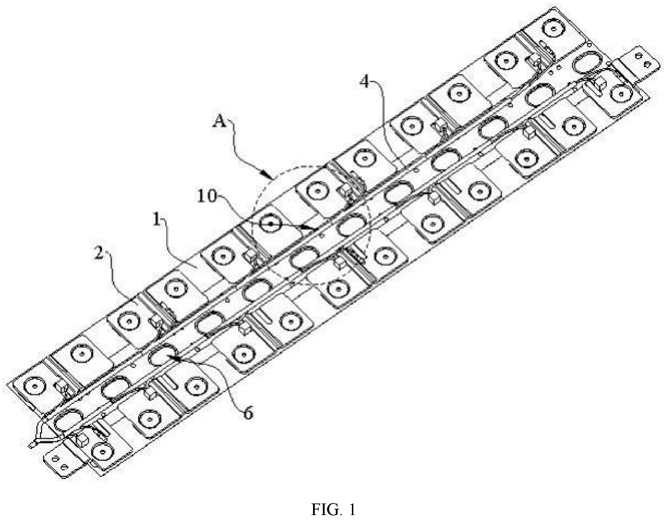

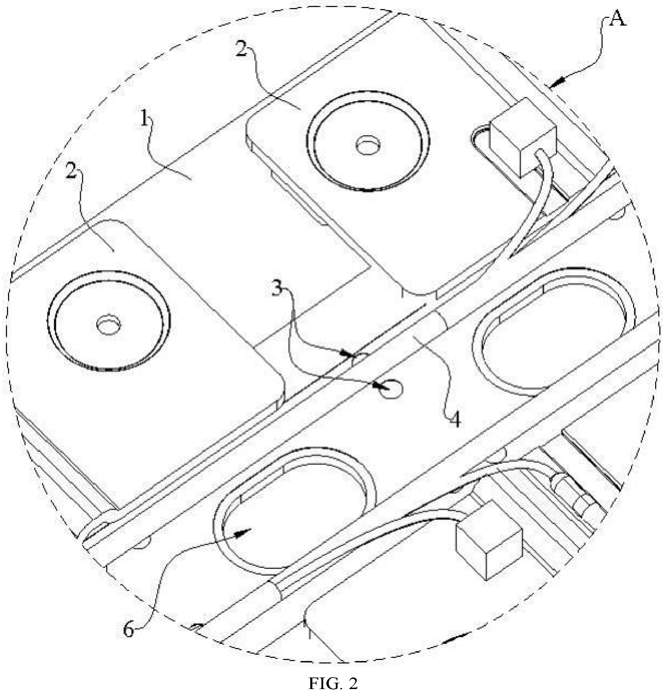

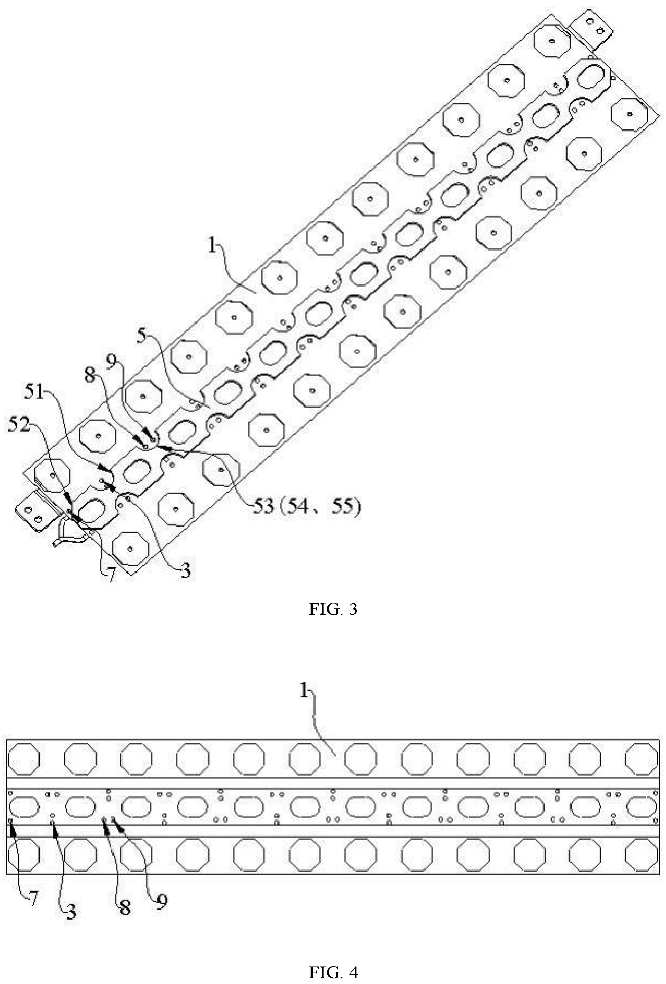

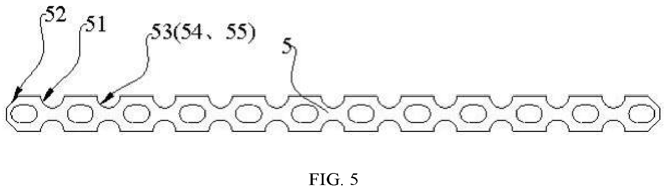

Embodiments of the present disclosure discloses a CCS assembly. Referring to FIG. 1 to FIG. 5, the CCS assembly includes a mounting bracket 1. The CCS assembly further includes a busbar group arranged on the mounting bracket 1. The busbar group includes a plurality of busbars 2 arranged at intervals. The CCS assembly further includes a plurality of wire harness fixing portions 10 arranged on the mounting bracket 1. In a width direction of the mounting bracket 1, the wire harness fixing portion 10 is arranged beside an area between two adjacent busbars 2. The CCS assembly further includes a wire harness 4 fixed on the mounting bracket 1 through the wire harness fixing portions 10.

In practical use, the positions of the wire harness fixing portions 10 arranged on the mounting bracket 1 have been designed after research and development, and specially arranged beside the area between two adjacent busbars 2. Such an arrangement is equivalent to reserving work positions for the wire harness fixing portions 10 beside the areas between two busbars 2. When the wire harness fixing portion 10 is used to fix the wire harness 4, the wire harness fixing portion 10 will not interfere with the busbar 2, thereby improving the overall position layout. Therefore, the CCS assembly adjusts the layout of the wire harness fixing portions 10 according to the arrangement of the busbars 2, to avoid direct contact between the wire harness fixing portions 10 and the busbars 2. Furthermore, the organization of the wire harness 4 will be more standardized, which can improve the overall aesthetic appearance.

It should be noted that, the number of the wire harness fixing portions 10 may specifically be multiple, and a specific positional relationship between the wire harness fixing portions 10 and the busbars 2 can be determined according to specific working conditions. For example, a wire harness fixing portion 10 can be provided beside the area between each two adjacent busbars 2. For another example, two adjacent busbars 2 can be grouped together, a wire harness fixing portion 10 is provided beside the area between two adjacent busbars 2 within the same group, while there is no need to provide a wire harness fixing portion 10 beside the area between two adjacent busbars 2 in different groups, so that the manufacturing process can be reduced. For another example, two or more wire harness fixing portions 10 may be provided beside the area between every two adjacent busbars 2.

In some embodiments, the CCS assembly further includes a buffer layer 5 provided on the mounting bracket 1. The busbar group is provided at a top of the mounting bracket 1 along a thickness direction, the buffer layer 5 is provided at a bottom of the mounting bracket 1 along the thickness direction, and the buffer layer 5 is provided with first avoidance notches 51 at positions corresponding to the wire harness fixing portions 10. By means of this arrangement, the first avoidance notch 51 provided on the buffer layer 5, can effectively avoid interference between the buffer layer 5 and the wire harness fixing portions 10 caused by direct contact between the wire harness fixing portions 10 and the buffer layer 5, thereby avoiding local bulging and further improving the overall aesthetic appearance. At the same time, the position where the buffer layer 5 is provided can avoid direct contact between cells and the mounting bracket 1, so as to better protect the cells and the mounting bracket 1. At the same time, it can also play the roles of supporting and buffering and shock absorbing at a certain level.

In some embodiments, a thickness of the buffer layer 5 itself is less than or equal to a height of poles of the cells assembled with the busbars 2. By means of this arrangement, during specific assembly, the busbar 2 and the pole of the cell 2 can be better welded without being interfered by the buffer layer 5, so as to facilitate better assembly.

In some embodiments, the buffer layer 5 may be EVA foam. The EVA foam is ethylene-vinyl acetate copolymer foam, which has low density, high elasticity, good heat resistance and low-temperature flexibility, as well as good chemical stability and aging resistance at the same time.

Certainly, in some other embodiments, the buffer layer 5 may also be made of materials such as PE, ECR, EVA+CR, silicone foam.

In some embodiments, the wire harness fixing portion 10 includes a wire harness hole 3 and a fixing strap (not shown in the figure) matched with the wire harness hole 3. The wire harness 4 is fixed by the wire harness hole 3 and the fixing strap. In specific use, the positions of the wire harness holes 3 provided on the mounting bracket 1 have been designed after research and development, and specially arranged between two adjacent busbars 2. Such an arrangement is equivalent to reserving a reservation position between the two busbars 2 for the assembly of the fixing strap. When the fixing strap is used to fix the fixing strap to the wire harness holes 3, the fixing strap will not interfere with the busbar 2, thereby improving the overall position layout. Therefore, the CCS assembly will adjust the layout of the wire harness holes 3 according to the arrangement of the busbars 2, to avoid direct contact between the fixing straps and the busbars 2.

In some embodiments, the fixing strap may specifically be a cable tie or a binding strap, which has a simple structure, is easy to produce and manufacture, and reduces the manufacturing difficulty.

Certainly, in other embodiments, the wire harness fixing portion 10 may also be a snap-in groove, through which the wire harness 4 is snap-in fixed.

In some embodiments, the first avoidance notch 51 is arranged on the buffer layer 5 at a position corresponding to the wire harness fixing portion 10. By means of this arrangement, interference between the buffer layer 5 and the fixing strap caused by direct contact between the wire harness fixing portion 10 and the buffer layer 5 can be effectively avoided, thereby avoiding local bulging and further improving the overall aesthetic appearance.

In some embodiments, the mounting bracket 1 is provided with a pressure relief hole group. The pressure relief hole group includes a plurality of pressure relief holes 6 arranged at intervals, and the wire harness fixing portions 10 are provided between the pressure relief hole group and the busbar group. Which such arrangement, the wire harness 4 can be reasonably distributed beside the pressure relief hole 6 to avoid abnormality caused by the wire harness 4 blocking the pressure relief hole 6, thereby improving the safety of the CCS assembly.

In some embodiments, at least one wire harness fixing portion 10 is provided between two adjacent pressure relief holes 6. Such an arrangement can also avoid abnormality caused by the wire harness fixing portion 10 blocking the pressure relief holes 6, thereby improving the safety of the CCS assembly.

It should be noted that, the number of the wire harness fixing portions 10 may specifically be multiple, and the specific positional relationship between the wire harness fixing portions 10 and the pressure relief holes 6 may be determined according to specific working conditions. For example, a wire harness fixing portion 10 may be provided between every two adjacent pressure relief holes 6. For another example, two adjacent pressure relief holes 6 are grouped together, and a wire harness fixing portion 10 is provided between two adjacent pressure relief holes 6 within the same group, while there is no need to provide a wire harness fixing portion 10 between two adjacent pressure relief holes 6 in different groups, so that the manufacturing process can be reduced. For another example, two or more wire harness fixing portions 10 may be provided between every two adjacent pressure relief holes 6.

It should be further noted that, the wire harness fixing portion 10 may be provided at a specific position beside an area between two adjacent pressure relief holes 6, or in order to make the structure more compact, parts of the wire harness fixing portion 10 itself may be offset into the area between two adjacent pressure relief holes 6, which is not limited herein.

In some embodiments, the mounting bracket 1 is provided with a first wire-binding hole 7 configured to constrain an output end of the wire harness 4. The first wire-binding hole 7 is located beside the busbar group. The first wire-binding holes 7 are provided at two ends of the mounting bracket 1 along a length direction of the mounting bracket 1. Such an arrangement can effectively constrain and fix the output end of the wire harness 4, so that the wire harness 4 can be prevented from being dislocated during use and causing abnormalities, thereby improving the safety of the CCS assembly.

In some embodiments, the buffer layer 5 is further provided with a second avoidance notch 52 at a position corresponding to the first wire-binding hole 7.

In some embodiments, the mounting bracket 1 is provided with a group of temperature-sensing reserved wire-binding holes for constraining temperature lines. The group of temperature-sensing reserved wire-binding holes is located beside the busbar group, and include a plurality of temperature-sensing reserved wire-binding holes 8 spaced apart. By means of this arrangement, the temperature lines can be effectively constrained and fixed, so that an abnormality caused by dislocation of the temperature lines during use can be avoided, thereby improving the safety of the CCS assembly.

In some embodiments, the buffer layer 5 is further provided with third avoidance notches 54 at positions corresponding to the temperature-sensing reserved wire-binding holes 8.

In some embodiments, the plurality of temperature-sensing reserved wire-binding holes 8 and the plurality of wire harness fixing portions 10 are arranged at intervals. Specifically, the plurality of temperature-sensing reserved wire-binding holes 8 and the plurality of wire harness holes 3 are arranged at intervals. By means of this arrangement, position areas on the mounting bracket 1 can be fully utilized, which not only makes the structure more compact, but also makes the organization of the wire harness 4 more standardized, thereby improving the overall aesthetic appearance.

In some embodiments, the mounting bracket 1 is provided with a group of voltage-collecting reserved wire-binding holes for constraining voltage-collecting lines. The voltage-collecting reserved wire-binding holes 9 are located beside the busbar group. The group of voltage-collecting reserved wire-binding holes includes a plurality of voltage-collecting reserved wire-binding holes 9 spaced apart. By means of this arrangement, the voltage-collecting lines can be effectively constrained and fixed, so that an abnormality caused by dislocation of the voltage-collecting lines during use is avoided, thereby improving the safety of the CCS assembly.

In some embodiments, the buffer layer 5 is further provided with fourth avoidance notches 55 at positions corresponding to the voltage-collecting reserved wire-binding holes 9.

In some embodiments, the plurality of voltage-collecting reserved wire-binding holes 9 and the plurality of wire harness fixing portions 10 are arranged at intervals. Specifically, the plurality of voltage-collecting reserved wire-binding holes 9 and the plurality of wire harness holes 3 are arranged at intervals. By means of this arrangement, position areas on the mounting bracket 1 can be fully utilized, which not only makes the structure more compact, but also makes the organization of the wire harness 4 more standardized, thereby improving the overall aesthetic appearance.

In some embodiments, the plurality of voltage-collecting reserved wire-binding holes 9 and the plurality of temperature-sensing reserved wire-binding holes 8 are arranged in pairs at intervals to form a group, and the buffer layer 5 is provided with a common fifth avoidance notch 53 at a position corresponding to the voltage-collecting reserved wire-binding hole 9 and the temperature-sensing reserved wire harness hole 8 that are in a group. By means of this arrangement, a more compact structural layout can be formed on the buffer layer 5, manufacturing processes can be reduced, and at the same time the overall will be more simplicity and aesthetics.

In some embodiments, two columns of the busbar groups are provided. The two columns of busbar groups are spaced apart along a width direction of the mounting bracket 1. Two columns of the wire harness fixing portions 10 are provided. The two columns of wire harness fixing portions 10 are spaced apart along the width direction of the mounting bracket 1, and arranged between the two columns of the busbar groups. The mounting bracket 1 is provided with a column of pressure relief hole groups, and the column of the pressure relief hole groups is arranged between the two columns of wire harness fixing portions 10. By means of this arrangement, the wire harness 4 can be reasonably distributed to two sides of the pressure relief hole 6, so as to avoid abnormality caused by the wiring harness 4 blocking the pressure relief holes 6, thereby improving the safety of the CCS assembly.

In some embodiments, a plurality of busbars 2 in each column of busbar groups are arranged at intervals along a length direction of the mounting bracket 1. A plurality of wire harness holes 3 in each column of wire harness fixing portions 10 are arranged at intervals along the length direction of the mounting bracket 1. Such arrangement makes full use of the position areas on the mounting bracket 1, makes the organization of the wire harness 4 more standardized, and improves the overall aesthetic appearance.

The embodiments of the present disclosure further disclose a battery pack that includes the aforementioned CCS assembly. Therefore, in practical use of the battery pack, the positions of the wire harness fixing portions 10 arranged on the mounting bracket 1 have been designed after research and development, and specially arranged beside the area between two adjacent busbars 2. Such an arrangement is equivalent to reserving work positions for the wire harness fixing portion 10 beside the area between the two busbars 2. When the wire harness fixing portion 10 is used to fix the wire harness 4, the wire harness fixing portion 10 will not interfere with the busbar 2, thereby improving the overall position layout. Therefore, the CCS assembly adjusts the layout of the wire harness fixing portions 10 according to the arrangement of the busbars 2, to avoid direct contact between the wire harness fixing portions 10 and the busbars 2. Furthermore, the organization of the wire harness 4 will be more standardized, which can improve the overall aesthetic appearance.

## Claims

1. A CCS assembly, comprising:
a mounting bracket (1);
a busbar group arranged on the mounting bracket (1), wherein the busbar group comprises a plurality of busbars (2) arranged at intervals;
a plurality of wire harness fixing portions (10) arranged on the mounting bracket (1), wherein in a width direction of the mounting bracket (1), the wire harness fixing portion (10) is arranged beside an area between two adjacent busbars (2); and
a wire harness (4), wherein the wire harness (4) is fixed on the mounting bracket (1) through the wire harness fixing portions (10).

2. The CCS assembly according to claim 1, further comprising a buffer layer (5) provided on the mounting bracket (1), wherein the busbar group is provided at a top of the mounting bracket (1) along a thickness direction, the buffer layer (5) is provided at a bottom of the mounting bracket (1) along the thickness direction, and the buffer layer (5) is provided with first avoidance notch (51) at position corresponding to the wire harness fixing portions (10).

3. The CCS assembly according to claim 2, wherein the wire harness fixing portion (10) comprises a wire harness hole (3) and a fixing strap matching the wire harness hole (3), and the wire harness (4) is fixed through the wire harness hole (3) and the fixing strap.

4. The CCS assembly according to claim 2, wherein the wire harness fixing portion (10) is a snap-in groove, through which the wire harness (4) is snap-in fixed.

5. The CCS assembly according to any one of claims 1 to 4, wherein the mounting bracket (1) is provided with a pressure relief hole group, wherein the pressure relief hole group comprises a plurality of pressure relief holes (6) arranged at intervals, and the wire harness fixing portions (10) are provided between the pressure relief hole group and the busbar group.

6. The CCS assembly according to claim 5, wherein at least one wire harness fixing portion (10) is provided between two adjacent pressure relief holes (6).

7. The CCS assembly according to any one of claims 2 to 4, wherein the mounting bracket (1) is provided with a first wire-binding hole (7) configured to constrain an output end of the wire harness (4), wherein the first wire-binding hole (7) is located beside the busbar group; the first wire-binding holes (7) are arranged at two ends of the mounting bracket (1) along a length direction of the mounting bracket (1);
the buffer layer (5) is provided with a second avoidance notch (52) at a position corresponding to the first wire-binding hole (7).

8. The CCS assembly according to any one of claims 2 to 4, wherein the mounting bracket (1) is provided with a group of temperature-sensing reserved wire-binding holes for constraining temperature lines; wherein the group of temperature-sensing reserved wire-binding holes is located beside the busbar group, and comprises a plurality of temperature-sensing reserved wire-binding holes (8) spaced apart;
the buffer layer (5) is provided with third avoidance notches (54) at positions corresponding to the temperature-sensing reserved wire-binding hole (8).

9. The CCS assembly according to claim 8, wherein the plurality of temperature-sensing reserved wire-binding holes (8) and the plurality of wire harness fixing portions (10) are arranged at intervals.

10. The CCS assembly according to any one of claims 2 to 4, wherein the mounting bracket (1) is provided with a group of voltage-collecting reserved wire-binding holes for constraining voltage-collecting lines; wherein the voltage-collecting reserved wire-binding holes (9) are located beside the busbar group, and comprises a plurality of voltage-collecting reserved wire-binding holes (9) spaced apart;
the buffer layer (5) is provided with fourth avoidance notches (55) at positions corresponding to the voltage-collecting reserved wire-binding holes (9).

11. The CCS assembly according to claim 10, wherein the plurality of voltage-collecting reserved wire-binding holes (9) and the plurality of wire harness fixing portions (10) are arranged at intervals.

12. The CCS assembly according to any one of claims 2 to 4, wherein the mounting bracket (1) is provided with a plurality of voltage-collecting reserved wire-binding holes (9) for constraining temperature lines and a plurality of temperature-sensing reserved wire-binding holes (8) for constraining voltage-collecting lines; wherein the plurality of voltage-collecting reserved wire-binding holes (9) and the plurality of temperature-sensing reserved wire-binding holes (8) are arranged in pairs at intervals to form a group; wherein the buffer layer (5) is provided with a common fifth avoidance notch (53) at a position corresponding to the voltage-collecting reserved wire-binding hole (9) and the temperature-sensing reserved wire harness hole (8) that are in a group.

13. The CCS assembly according to any one of claims 1 to 4, 6, 9 and 11, wherein two columns of the busbar groups are provided, wherein the two columns of the busbar groups are spaced apart along a width direction of the mounting bracket (1);
two columns of the wire harness fixing portions (10) are provided, wherein the two columns of the wire harness fixing portions (10) are spaced apart along the width direction of the mounting bracket (1), and arranged between the two columns of the busbar groups;
the mounting bracket (1) is provided with a column of pressure relief hole groups; wherein the column of the pressure relief hole groups is arranged between two columns of wire harness fixing portions (10).

14. The CCS assembly according to any one of claims 2 to 4, 9 and 11, wherein a thickness of the buffer layer (5) itself is less than or equal to a height of poles of cells assembled with the busbars (2).

15. A battery pack, comprising the CCS assembly according to any one of claims 1 to 14.
